Europäisches Patentamt

European Patent Office

Office européen des brevets

(19)

(11) **EP 0 635 773 B1**

(12) **EUROPÄISCHE PATENTSCHRIFT**

(45) Veröffentlichungstag und Bekanntmachung des Hinweises auf die Patenterteilung:
**29.09.1999 Patentblatt 1999/39**

(51) Int Cl.6: **G05D 1/02**, G01C 21/00

(21) Anmeldenummer: **94110598.3**

(22) Anmeldetag: **07.07.1994**

(54) **Verfahren zur Erstellung einer Umgebungskarte und zur Bestimmung einer Eigenposition in der Umgebung durch eine selbstbewegliche Einheit**

Method for producing an environment card and for determining a position in the environment by an automotive unit

Procédé d'établissement d'une carte de l'environnement et de détermination d'une position dans l'environnement au moyen d'un appareil automoteur

(84) Benannte Vertragsstaaten:
**DE ES FR GB SE**

(30) Priorität: **21.07.1993 DE 4324531**

(43) Veröffentlichungstag der Anmeldung:
**25.01.1995 Patentblatt 1995/04**

(73) Patentinhaber: **SIEMENS AKTIENGESELLSCHAFT**
**80333 München (DE)**

(72) Erfinder: **Rencken, Wolfgang, Dr.**
**D-85435 Erding (DE)**

(56) Entgegenhaltungen:
**WO-A-87/07056          US-A- 4 809 178**

- **AUTONOMOUS ROBOT VEHICLES,SPRINGER VERLAG, 1990 pages 167 - 193 R.SMITH ET AL 'ESTIMATING UNCERTAIN SPATIAL RELATIONSHIPS IN ROBOTICS'**
- **5TH SYMPOSIUM ON ROBOTICS RESEARCH, 1989 pages 85 - 94 P.MOUTALIER ET AL 'STOCHASTIC MULTISENSORY DATA FUSION FOR MOBILE ROBOT LOCATION AND ENVIROMENT MODELLING'**

**Beschreibung**

Die vorliegende Erfindung betrifft ein Verfahren zur Erstellung einer Umgebungskarte und zur Bestimmung einer Eigenposition in der Umgebung durch eine selbstbewegliche Einheit

Heutzutage gibt es vielfältige Einsatzmöglichkeiten für autonom operierende mobile Einheiten. Man denke in diesem Zusammenhang an Fernerkundungssonden, an mobile Einheiten, die in Gefahrengebieten operieren, an selbstbewegliche Industriestaubsauger, an Transportfahrzeuge in der Fertigungsindustrie und nicht zuletzt an selbst bewegliche Roboter. Um jedoch eine sinnvolle Aufgabe in einer a priori unbekannten Umgebung erfüllen zu können, muß ein autonomer, mobiler Roboter sowohl schrittweise eine zuverlässige Karte seiner Arbeitsumgebung aufbauen, als auch sich anhand dieser Karte zu jedem gegebenen Zeitpunkt selbst lokalisieren können. Wegen der sehr komplexen und unstrukturierten Umgebungen, in denen solche selbstbeweglichen Einheiten möglicherweise manövrieren, bleiben ihre Einsatzbereiche häufig auf Büro und Haushaltsumgebungen beschränkt. Da im allgemeinen eine a priori Karte nicht verfügbar ist, muß eine solche selbstbewegliche Einheit mit Sensoren ausgestattet sein, welche es der Einheit erlauben, flexibel mit ihrer Umgebung in Wechselwirkung zu treten. Einige solche Sensoren sind Laser-Entfernungsscanner, Videokameras und beispielsweise Ultraschallsensoren.

Ein besonderes Problem dieser mobilen Einheiten besteht darin, daß die Bildung der Umgebungskarte und die Lokalisierung der mobilen Einheit voneinander abhängen. Es gehen dabei verschiedene Fehler ein. Zum einen vermißt eine solche mobile Einheit ihre von einer Ausgangsposition aus zurückgelegte Wegstrecke, zum anderen vermißt sie mit Entfernungssensoren die Entfernung zu auftretenden Hindernissen und trägt diese als Landmarken in der Umgebungskarte ein. Da sich diese Fehler kummulieren und über längere Strecken auf summieren, ist ab einer bestimmten Grenze eine sinnvolle Manövrierbarkeit der mobilen Einheit nicht mehr gegeben.

Bisherige Lösungsansätze für dieses Problem beruhen darauf, daß charakteristische Landmarken in der Umgebung erkannt werden und ihre Positionen relativ zur mobilen Einheit vermessen werden. Aus diesen relativen Positionen der Landmarken und der absoluten Position der Einheit werden die absoluten Lagen der Landmarken bestimmt. Alle Sensormessungen sind in der Regel mit Unsicherheiten behaftet. Daher werden Verfahren eingesetzt, mit denen die bestmögliche Schätzung für die Position der mobilen Einheit und die Positionen der Landmarken gleichzeitig gefunden werden. Bisher gibt es verschiedenste Ansätze zur Lösung dieses Problems.

Bei Smith, Self und Cheeseman [3] sind sämtliche nichtlinearen Unsicherheitsrelationen zwischen den bisher detektierten Landmarken und der Einheit als bekannt vorausgesetzt. In einem einzigen Schritt werden sowohl die Position der Einheit, als auch die Positionen der Landmarken geschätzt. Dabei beruht die Schätzung auf einer Linearisierung der nichtlinearen Systemgleichungen um einen Arbeitspunkt, der aufgrund vergangener Messungen bestimmt wird. Dadurch neigt dieses Verfahren zur Instabilität.

Ein anderer Ansatz von Moutarlier und Chatila [2] versucht daher die Stabilität zu verbessern, indem zuerst die Position des Roboters unter Verwendung neuer Sensormessungen geschätzt wird. Erst danach werden aufgrund dieser neuen Position der mobilen Einheit die Positionen der Landmarken geschätzt. Beide Verfahren sind wegen der vielen zu berücksichtigten Unsicherheitsrelationen sehr rechenaufwendig und daher für den praktischen Einsatz kaum tauglich.

In einem Verfahren von Leonhard und Durrant-Whyte [1] werden die Unsicherheitsrelationen zwischen den Landmarken und der mobilen Einheit nicht berücksichtigt. So wird einerseits die Rechenzeit drastisch reduziert, andererseits können die Fehler zwischen den prädizierten und gemessenen Sensorwerten nicht den jeweiligen Fehlerquellen zugeordnet werden. Um eine Stabilität des Verfahrens zu gewährleisten, muß vorausgesetzt werden, daß die mobile Einheit im Stillstand sehr genau Landmarken detektieren kann. Somit sind sehr genaue Sensoren gefordert, die auch wiederum wegen ihrer hohen Kosten die praktische Verwendung dieses Verfahrens begrenzen.

Allgemeine Angaben zur Kartenbildung und zur Bewegung von mobilen Einheiten in kartographierten Umgebungen können [4] und [1] entnommen werden.

Aus [5] ist es bekannt, zur Bestimmung einer Eigenposition einer selbstbeweglichen Einheit und zur Erstellung einer Karte von deren Umgebung eine erste Eigenposition relativ zu einer Ausgangsposition mit einer Lage-Unsicherheit zu ermitteln. Von dieser Position wird ein Abstand einer Landmarke mit einer Lage-Unsicherheit ermittelt.

Der Erfindung liegt die Aufgabe zugrunde, ein Verfahren zur Erstellung einer Umgebungskarte und zur Bestimmung einer Eigenposition für solche Fälle anzugeben, bei denen die Kartenerstellung und die Lokalisierung der mobilen Einheit nicht vollständig voneinander entkoppelbar sind.

Diese Aufgabe wird mit dem Verfahren gemäß den Merkmalen des Patentanspruchs 1 gelöst.

Zur Lösung der Aufgabe wird ein Verfahren zur Erstellung einer Umgebungskarte und zur Bestimmung einer Eigenposition einer selbstbeweglichen Einheit in einer Umgebung mittels der selbstbeweglichen Einheit angegeben, bei dem

a) ausgehend von einer Anfangsposition von der selbstbeweglichen Einheit eine Positionsveränderung durchgeführt und durch mindestens ein an der Einheit angeordnetes erstes Meßmittel ermittelt wird;

b) eine erste Eigenposition (P1K) der selbstbeweglichen Einheit relativ zu der Anfangsposition unter Berücksichtigung einer Positionsunsicherheit (U1K) der selbstbeweglichen Einheit ermittelt wird;

c) ein Startabstand einer Landmarke durch ein an der selbstbeweglichen Einheit angeordnetes zweites Meßmittel gemessen wird;

d) unter Berücksichtigung der Positionsunsicherheit und des Startabstands zu der Landmarke (LP) ein erster Abstand mit einer Lageunsicherheit (ULP) zwischen der selbstbeweglichen Einheit und der Landmarke festgestellt wird;

e) die erste Eigenposition (P1K) und die aus dem ersten Abstand zu der selbstbeweglichen Einheit ermittelbare Landmarke eine Umgebungskarte bilden;

f) anhand einer weiteren durch das erste Meßmittel ermittelten Positionsveränderung der selbstbeweglichen Einheit eine zweite Eigenposition (P2P) relativ zu der ersten Eigenposition (P1K) unter Berücksichtigung der Positionsunsicherheit (U2P) der selbstbeweglichen Einheit ermittelt wird;

g) anhand der zweiten Eigenposition mit Hilfe der Umgebungskarte ein erster zweiter Abstand (MP) zu der Landmarke prädiziert wird;

h) ein zweiter zweiter Abstand (MR) zwischen der selbstbeweglichen Einheit und der Landmarke gemessen wird;

i) als Systemfehler eine Differenz ($\tilde{z}$) zwischen dem ersten zweiten Abstand (MP) und dem zweiten zweiten Abstand (MR) bestimmt wird;

j) die Differenz ($\tilde{z}$) in Abhängigkeit der Positionsunsicherheit (U2P) der Eigenposition und der Lageunsicherheit der Landmarke in eine Positionskorrektur (PK) und eine Lagekorrektur (LKO) unterteilt wird anhand derer die zweite Eigenposition (P2P zu P2K) und die Position der Landmarke (LP zu LK) in der Umgebungskarte korrigiert werden.

Weiterbildungen der Erfindung ergeben sich aus den Unteransprüchen.

In einer bevorzugten Ausgestaltung ist die Startkarte bekannt.

In einer weiteren Ausgestaltung wird eine Lagekorrektur mindestens nach

$$\tilde{z}_{\hat{p}_t(k+1|k)} = \eta \beta_{\hat{p}_t(k+1|k)} \tilde{z}(k+1)$$

und eine Positionskorrektur mindestens nach

$$\tilde{z}_{\hat{x}(k+1|k)} = \eta \beta_{\hat{x}(k+1|k)} \tilde{z}(k+1)$$

berechnet wird mit:

$$\beta_{\hat{p}_t(k+1|k)} = \frac{\nabla h_{\hat{p}_t(k+1|k)} \Lambda_t(k+1|k) \nabla h_{\hat{p}_t(k+1|k)}^T + \dfrac{R(k+1)}{2}}{S(k+1)}$$

und

$$\beta_{\hat{x}(k+1|k)} = \frac{\nabla h_{\hat{x}(k+1|k)} P(k+1|k) \nabla h^T_{\hat{x}(k+1|k)} + \dfrac{R(k+1)}{2}}{S(k+1)}$$

einer Positions-Unsicherheit,

$$Pos = \nabla h_{\hat{x}(k+1|k)} P(k+1|k) \nabla h^T_{\hat{x}(k+1|k)}$$

einer Lage-Unsicherheit,

$$Lag = \nabla h_{\hat{p}_t(k+1|k)} \Lambda_t(k+1|k) \nabla h^T_{\hat{p}_t(k+1|k)}$$

einem Systemfehler

$$S(k+1) = \nabla h_{\hat{x}(k+1|k)} P(k+1|k) \nabla h^T_{\hat{x}(k+1|k)} + \nabla h_{\hat{p}_t(k+1|k)} \Lambda_t(k+1|k) \nabla h^T_{\hat{p}_t(k+1|k)} + R(k+1)$$

einem Meßfehler R(k+1)
und mit

$\tilde{z}(k+1)$: Systemfehler zur Zeit k+1

$\hat{z}(k+1|k)$: berechneter prädizierter Landmarkenabstand zur Zeit k+1 mit $\hat{z}(k+1|k) = h(\hat{x}(k+1|k), \hat{p}_t(k+1|k))$

$\hat{x}(k+1|k)$: prädizierte Eigenposition der Einheit zur Zeit k+1

$\hat{p}_t(k+1|k)$: prädizierte Landmarkenposition der Einheit zur Zeit k+1

$\nabla h_{\hat{p}_t(k+1|k)}$: Jakobische der Funktion h nach $\hat{p}_t(k+1|k)$

$\nabla h_{\hat{x}(k+1|k)}$: Jakobische der Funktion h nach $\hat{x}(k+1|k)$

$P(k+1|k)$: Kovarianzmatrix von $\hat{x}(k+1|k)$ zur Zeit k+1

$\Lambda_t(k+1|k)$: Kovarianzmatrix von $\hat{p}_t(k+1|k)$ zur Zeit k+1

$\eta$: Konvergenzfaktor mit $0 \leq \eta \leq 1$

Indizes     ^: prädizierter Wert     ~: Differenzwert
Bevorzugt gilt R(k+1) = 0.
Das Verfahren kann zyklisch wiederholt werden.
Ein besonderer Vorteil des erfindungsgemäßen Verfahrens besteht darin, daß zu seiner Durchführung kein großer Rechenaufwand erforderlich ist. Es werden lediglich prädizierte und aktuelle Meßwerte voneinander subtrahiert und das Ergebnis dieser Subtraktion im Verhältnis der auftretenden Lage- bzw. Positionsunsicherheiten aufgeteilt, um damit die Lage der Landmarke und die Position der Einheit in einer Umgebungskarte zu korrigieren. Somit können einfache Rechner und kleine Speicher verwendet werden, oder es können häufiger Probenmes sungen durchgeführt werden, was die Genauigkeit des erfindungsgemäßen Verfahrens erhöht.

Falls in der Startkarte eine Landmarke bekannt ist, so kann sich die mobile Einheit genau orientieren. Da die auftretenden Fehler kleiner sind, ist somit ein größerer Raum durchfahrbar.

Mit der Wiederverwendung einer durch das erfindungsgemäße Verfahren erstellten Karte als Umgebungskarte erreicht man, daß die auftretenden Unsicherheiten in geringerem Maße anwachsen, als das sonst der Fall wäre.

Durch den Eintrag zusätzlicher Landmarken in der Umgebungskarte vergrößert man den Bewegungsspielraum der mobilen Einheit in Bezug auf die Reichweite der Sensoren zur Entfernungsmessung.

Der Einsatz eines Odometers als Wegmeßgerät für das erfindungsgemäße Verfahren ist besonders günstig bei radgetriebenen Fahrzeugen.

Günstigerweise kann für das erfindungsgemäße Verfahren je nach Einsatzbereich der mobilen Einheit ein kostengünstiges Entfernungsmeßgerät verwendet werden, mit dem Landmarken erkannt werden.

Um die Unsicherheiten zu minimieren, kann man den Meßfehler eines Entfernungsmeßgerates dem Systemfehler zuschlagen und bei der Korrektur berücksichtigen.

Besonders günstig ist der Einsatz des erfindungsgemäßen Verfahrens in einem bekannten Karten-Bildungs- und Positionsbestimmungsverfahren, welches von Leonard in [1] beschrieben wurde. Günstig ist es zwar die Meßunsicherheit des Sensors für dei Entfernungsmessung zu berücksichtigen, wie das der Vollständigkeit halber in den Formeln beansprucht ist, das Verfahren funktioniert aber auch ohne diesen Term von R.

Die verwendeten Bezeichnungen in den Gleichungen entsprechen hierbei den Bezeichnungen von Leonard.

Durch eine zyklische Wiederholung des erfindungsgemäßen Verfahrens erreicht man einen größtmöglichen Bewegungsspielraum für eine mobile Einheit.

Im folgenden wird die Erfindung anhand von Figuren weiter erläutert.

Figur 1 zeigt dabei eine selbstbewegliche Einheit in einer Umgebung.

Figur 2 zeigt die Aufteilung des Systemfehlers.

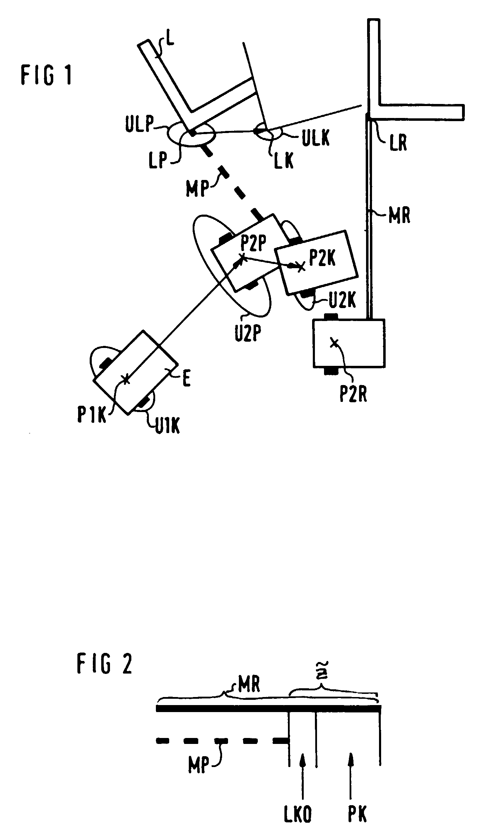

In Figur 1 ist exemplarisch die Durchführung des erfindungsgemäßen Verfahrens dargestellt. Es ist eine mobile Einheit E auf verschiedenen Positionen dargestellt, die für das erfindungsgemäße Verfahren charakteristisch sind. Weiterhin ist eine Landmarke L zu erkennen, deren Lage nach dem erfindungsgemäßen Verfahren bestimmt wird.

Zur Beginn ihrer Bewegung befindet sich hier beispielsweise die mobile Einheit E in einer Position P1K, die mit einer Unsicherheit U1K behaftet ist. Diese Positionsunsicherheit ist durch eine Ellipse dargestellt. Nach einem Bewegungsvorgang glaubt sich die Einheit an einer Position P2P zu befinden. Diese Position P2P ist eine prädizierte Position, d.h. aufgrund der Messungen mit beispielsweise einem Odometer sollte sich in Relation zur Ausgangsposition P1K die mobile Einheit nun an der Position P2P befinden. Diese Position entspricht jedoch nicht dem realen Aufenthaltsort der Einheit in der Umgebung, da die Wegmessung fehlerbehaftet ist. Die Position P2P ist beispielsweise in einer Umgebungskarte in einem Orientierungsrechner der mobilen Einheit als aktuelle Position gespeichert und als aktuelle Position in der Umgebungskarte eingetragen. Aufgrund einer von der Position P1K durchgeführten Entfernungsmessung zur Landmarke in LR, wird nun von der Position P2P ein Abstand MP zur vermeintlichen Lage LP der der Landmarke prädiziert. Die Lage LP der Landmarke L weist in diesem Fall eine mit einer Ellipse dargestellte Unsicherheit ULP auf.

Die Position P2P ist jedoch nicht die reale Position, welche von der Einheit eingenommen wird. In Wirklichkeit befindet sie sich an der Position P2R. Durch eine Messung mit einem Entfernungsmessgerät, beispielsweise einem Laserradar oder einem Ultraschallsensor wird nun der reale Abstand der Einheit MR zur Lage der Landmarke LR bestimmt. Hierbei ist zu beachten, daß weder die Position P2R, noch die Lage LR der Landmarke eine Unsicherheit aufweisen, da es sich hierbei um die realen Positionen handelt. Falls Entfernungsmeßgeräte, die einen Fehler aufweisen, verwendet werden, wäre er hier zu berücksichtigen. Seine Verarbeitung ist jedoch nicht notwendig zur Durchführung des erfindungsgemäßen Verfahrens.

Wie das in der zitierten Literatur genauer beschrieben ist, wird beispielsweise die Position einer mobilen Einheit in Form von Koordinaten und in Form einer Orientierung, die im Koordinatensystem einen Drehwinkel der Einheit angibt, beschrieben. Daraus kann man ersehen, daß eine Abstandsmessung auch abhängig von der Drehorientierung der mobilen Einheit in einem Koordinatensystem ist. Beispielsweise sind diese Drehorientierungen und der Abstand bei der Korrektur der Position und der Landmarke der mobilen Einheit zu berücksichtigen.

Da nun die Größen, die für das erfindungsgemäße Verfahren Voraussetzung sind, zur Verfügung stehen, kann es durchgeführt werden.

Das heißt, nun wird der reale Abstand MR mit dem prädizierten Abstand verglichen und es wird beispielsweise die Differenz gebildet. Diese Differenz wird in Abhängigkeit der Lageunsicherheit ULP und der Positionsunsicherheit U2P aufgeteilt und mit dem jeweiligen Anteil wird die Lage der Landmarke und die Position der mobilen Einheit in der Umgebungskarte korrigiert. Man erhält für die Landmarke dann die Position LK mit einer Unsicherheit ULK, wobei zu beachten ist, daß die Unsicherheit ULK kleiner ist als die Unsicherheit ULP. Für die mobile Einheit erhält man nach der Durchführung des erfindungsgemäßen Verfahrens die Position P2K mit einer Unsicherheit U2K, wobei wiederum gilt, daß diese Unsicherheit U2K geringer ist als die Unsicherheit U2P.

Bei einer Verwendung dieser neuen Werte für einen weiteren Schritt des erfindungsgemäßen Verfahrens in der Startkarte, kann man auf einer geringeren Unsicherheit aufsetzen und somit neue Positionen der Einheit und neue Lagen von Landmarken mit einer größeren Genauigkeit bestimmen.

Figur 2 zeigt die Aufteilung des Systemfehlers nach dem erfindungsgemäßen Verfahren. Es sind dargestellt, die reale Messung MR und die prädizierte Abstandsmessung MP. Die Differenz aus diesen beiden Abständen ergibt beispielsweise den Systemfehler S. Dieser Systemfehler wird nun in eine Lagekorrektur LKO und eine Positionskorrektur PK aufgeteilt. Die Aufteilung erfolgt, wie es das erfindungsgemäße Verfahren vorsieht, nach der Größe der jeweiligen Unsicherheit, mit der die Positionsbestimmung, bzw. die Lagebestimmung behaftet ist. Mit der Lagekorrektur LKO wird nun die Lage einer Landmarke korrigiert und mit der Positionskorrektur PK wird die Position der mobilen Einheit in der Umgebungskarte neu festgelegt. Hierbei ist zu beachten, daß bei der Korrektur sowohl die Position der mobilen Einheit in einem Koordinatensystem zu einer bestimmten Zeit, als auch die Drehrichtung der mobilen Einheit zu berücksichtigen ist.

Die Korrektur der jeweiligen Positionen bzw. Lage kann dann durch Anwendung der entsprechenden Winkelfunktionen auf die Koordinatenwerte erfolgen.

Literaturverzeichnis

[1] J.J. Leonard and H.F. Durrant-Whyte, Directed Sonar Sensing for Mobile Robot Navigation (S 51-65; S 97-111; S 129-138). Kluwer Academic Publishers, Boston, London, Dordrecht, 1992

[2] P. Moutarlier and Chatila R. Stochastic multisensory data fusion for mobile robot location and environment modeling. In 5th Int. Symposium on Robotics Research, 1989

[3] R. Smith, M. Self, and P. Cheeseman. Estimating uncertain spatial relationships in robotics. In I. Cox and G. Wilfong, editors, Autonomous Robot Vehicles ( S 167-193). Springer Verlag, 1990

[4] Y. Bar-Shalom and T.E. Fortmann, Tracking and Data Association (S 52-61; S 100-109). Academic Press, 1988.

[5] P. Moutarlier und R. Chatila, Stochastic Multisensory Data Fusion For Mobile Robot Location And Environment Modelling, 5th International Symposium on Robotics Research, S. 85 - 94, 1989

**Patentansprüche**

1. Verfahren zur Erstellung einer Umgebungskarte und zur Bestimmung einer Eigenposition einer selbstbeweglichen Einheit in einer Umgebung mittels der selbstbeweglichen Einheit, bei dem

    a) ausgehend von einer Anfangsposition von der selbstbeweglichen Einheit eine Positionsveränderung durchgeführt und durch mindestens ein an der Einheit angeordnetes erstes Meßmittel ermittelt wird;

    b) eine erste Eigenposition (P1K) der selbstbeweglichen Einheit relativ zu der Anfangsposition unter Berücksichtigung einer Positionsunsicherheit (U1K) der selbstbeweglichen Einheit ermittelt wird;

    c) ein Startabstand einer Landmarke durch ein an der selbstbeweglichen Einheit angeordnetes zweites Meßmittel gemessen wird;

    d) unter Berücksichtigung der Positionsunsicherheit und des Startabstands zu der Landmarke (LP) ein erster Abstand mit einer Lageunsicherheit (ULP) zwischen der selbstbeweglichen Einheit und der Landmarke festgestellt wird;

    e) die erste Eigenposition (P1K) und die aus dem ersten Abstand zu der selbstbeweglichen Einheit ermittelbare Landmarke eine Umgebungskarte bilden;

    f) anhand einer weiteren durch das erste Meßmittel ermittelten Positionsveränderung der selbstbeweglichen Einheit eine zweite Eigenposition (P2P) relativ zu der ersten Eigenposition (P1K) unter Berücksichtigung der Positionsunsicherheit (U2P) der selbstbeweglichen Einheit ermittelt wird;

g) anhand der zweiten Eigenposition mit Hilfe der Umgebungskarte ein erster zweiter Abstand (MP) zu der Landmarke prädiziert wird;

h) ein zweiter zweiter Abstand (MR) zwischen der selbstbeweglichen Einheit und der Landmarke gemessen wird;

i) als Systemfehler eine Differenz ($\tilde{z}$) zwischen dem ersten zweiten Abstand (MP) und dem zweiten zweiten Abstand (MR) bestimmt wird;

j) die Differenz ($\tilde{z}$) in Abhängigkeit der Positionsunsicherheit (U2P) der Eigenposition und der Lageunsicherheit der Landmarke in eine Positionskorrektur (PK) und eine Lagekorrektur (LKO) unterteilt wird anhand derer die zweite Eigenposition (P2P zu P2K) und die Position der Landmarke (LP zu LK) in der Umgebungskarte korrigiert werden.

2. Verfahren nach Anspruch 1,
   bei dem zugleich mehrere Landmarken berücksichtigt werden.

3. Verfahren nach Anspruch 1 oder 2,
   bei dem die Schritte f) bis j) iterativ angewandt werden und damit die Umgebungskarte durch weitere Positionsveränderungen der selbstbeweglichen Einheit verfeinert wird.

4. Verfahren nach einem der Ansprüche 1 bis 3,
   bei dem eine Umgebungskarte vorgegeben ist.

5. Verfahren nach einem der vorhergehenden Ansprüche,
   bei dem eine Lage von mindestens einer zusätzlich erfaßten Landmarke in der Umgebungskarte eingetragen wird.

6. Verfahren nach einem der vorhergehenden Ansprüche,
   bei dem das Meßmittel ein Entfernungsmeßgerät ist.

7. Verfahren nach einem der vorhergehenden Ansprüche,
   bei dem die Lagekorrektur (LKO)

$$\tilde{z}_{\hat{p}_t(k+1|k)} \;=\; \eta\beta_{\hat{p}_t(k+1|k)}\tilde{z}(k+1)$$

und die Positionskorrektur (PK)

$$\tilde{z}_{\hat{x}(k+1|k)} \;=\; \eta\beta_{\hat{x}(k+1|k)}\tilde{z}(k+1)$$

ermittelt werden mit

$$\beta_{\hat{p}_t(k+1|k)} \;=\; \frac{\nabla h_{\hat{p}_t(k+1|k)}\Lambda_t(k+1|k)\nabla h_{\hat{p}_t(k+1|k)}^T \;+\; \dfrac{R(k+1)}{2}}{S(k+1)},$$

$$\beta_{\hat{x}(k+1|k)} = \frac{\nabla h_{\hat{x}(k+1|k)} P(k+1|k) \nabla h^T_{\hat{x}(k+1|k)} + \frac{R(k+1)}{2}}{S(k+1)},$$

einer Positions-Unsicherheit

$$Pos = \nabla h_{\hat{x}(k+1|k)} P(k+1|k) \nabla h^T_{\hat{x}(k+1|k)},$$

einer Lage-Unsicherheit

$$Lag = \nabla h_{\hat{p}_t(k+1|k)} \Lambda_t(k+1|k) \nabla h^T_{\hat{p}_t(k+1|k)},$$

einem Systemfehler

$$S(k+1) = \nabla h_{\hat{x}(k+1|k)} P(k+1|k) \nabla h^T_{\hat{x}(k+1|k)} +$$
$$+ \nabla h_{\hat{p}_t(k+1|k)} \Lambda_t(k+1|k) \nabla h^T_{\hat{p}_t(k+1|k)} + R(k+1)$$

einem Meßfehler R(k+1) und mit

$\tilde{z}(k+1)$       Meßdifferenz (MR-MP) zur Zeit k+1,

$\tilde{z}(k+1|k)$       berechneter prädizierter Landmarkenabstand (MP) zur Zeit k+1 mit $\hat{z}(k+1|k) = h(\hat{x}(k+1|k), \hat{p}_t(k+1|k))$,

$\hat{x}(k+1|k)$       prädizierte Eigenposition (P2P) der Einheit zur Zeit k+1,

$\hat{p}_t(k+1|k)$       prädizierte Landmarkenposition (LP) der Einheit zur Zeit k+1,

$\nabla h_{\hat{p}_t(k+1|k)}$       Jakobische der Funktion h nach $\hat{p}_t(k+1|k)$,

$\nabla h_{\hat{x}(k+1|k)}$       Jakobische der Funktion h nach $\hat{x}(k+1|k)$,

$P(k+1|k)$       Kovarianzmatrix (U2P) von $\hat{x}(k+1|k)$ zur Zeit k+1,

$\Lambda_t(k+1|k)$       Kovarianzmatrix (ULP) von $\hat{p}_t(k+1|k)$ zur Zeit k+1,

$\eta$       Konvergenzfaktor mit $0 \leq \eta \leq 1$,

wobei die Indizes ^ einen prädizierten Wert und ~ einen Differenzwert bezeichnen.

8. Verfahren nach Anspruch 7,
bei dem R(k+1) = 0 gilt.

**Claims**

1. Method for producing an environment card and for determining a self-position of an automotive unit in an environment by means of the automotive unit, in which

   a) starting from an initial position of the automotive unit, a change in position is carried out and determined by at least one first measuring means arranged on the unit;
   b) a first self-position (P1K) of the automotive unit is determined relative to the initial position, taking account of a positional uncertainty (U1K) of the automotive unit;
   c) a starting distance from a landmark is measured by a second measuring means arranged on the automotive unit;
   d) taking account of the positional uncertainty and of the starting distance to the landmark (LP), a first distance is established with a positional uncertainty (ULP) between the automotive unit and the landmark;
   e) the first self-position (P1K) and the landmark, which can be determined from the first distance to the automotive unit, form an environment card;
   f) with the aid of a further positional change, determined by the first measuring means, of the automotive unit, a second self-position (P2P) is determined relative to the first self-position (P1K), taking account of the positional uncertainty (U2P) of the automotive unit;
   g) a first second distance (MP) to the landmark is predicted using the second self-position with the aid of the environment card;
   h) a second second distance (MR) is measured between the automotive unit and the landmark;
   i) a difference ($\tilde{z}$) between the first second distance (MP) and the second second distance (MR) is determined as system error;
   j) as a function of the positional uncertainty (U2P) of the self-position and the positional uncertainty of the landmark, the difference ($\tilde{z}$) is subdivided into a positional correction (PK) and a positional correction (LKO) with the aid of which the second self-position (P2P to P2K) and the position of the landmark (LP to LK) in the environment card are corrected.

2. Method according to Claim 1, in which a plurality of landmarks are taken into account simultaneously.

3. Method according to Claim 1 or 2, in which the steps f) to j) are applied iteratively, and thus the environment card is refined by further positional changes of the automotive unit.

4. Method according to one of Claims 1 to 3, in which an environment card is prescribed.

5. Method according to one of the preceding claims, in which a position of at least one additionally detected landmark is entered in the environment card.

6. Method according to one of the preceding claims, in which the measuring means is a distance-measuring unit.

7. Method according to one of the preceding claims, in which the positional correction (LKO)

$$\tilde{z}_{\hat{p}_t}(k+1/k) = \eta \beta_{\hat{p}_t}(k+1/k)\, \tilde{z}(k+1)$$

and the positional correction (PK)

$$\tilde{z}_{\hat{x}(k+1/k)} = \eta \beta_{\hat{x}(k+1/k)}\, \tilde{z}(k+1)$$

are determined using

$$\beta_{\hat{p}_t}(k+1/k) = \frac{\nabla h_{\hat{p}_t(k+1/k)}\Lambda_t(k+1/k)\nabla h^T_{\hat{p}_t(k+1/k)} + \frac{R(k+1)}{2}}{S(k+1)},$$

$$\beta_{\hat{x}(k+1/k)} = \frac{\nabla h_{\hat{x}(k+1/k)}P(k+1/k)\nabla h^T_{\hat{x}(k+1/k)} + \frac{R(k+1)}{2}}{S(k+1)},$$

a positional uncertainty

$$Pos + \nabla h_{\hat{x}(k+1/k)}P(k+1/k)\nabla h^T_{\hat{x}(k+1/k)},$$

a positional uncertainty

$$Lag = \nabla h_{\hat{p}_t(k+1/k)}\Lambda_t(k+1/k)\nabla h^T_{\hat{p}_t(k+1/k)},$$

a system error

$$S(k+1) = \nabla h_{\hat{x}(k+1/k)}P(k+1/k)\nabla h^T_{\hat{x}(k+1/k)} +$$

$$+ \nabla h_{\hat{p}_t(k+1/k)}\Lambda_t(k+1/k)\nabla h^T_{\hat{p}_t(k+1/k)} + R(k+1)$$

a measurement error R(k + 1), and using

$\tilde{z}(k+1)$ measured difference (MR-MP) at time k + 1,

$\tilde{z}(k+1/k)$ calculated predicted landmark distance (MP) at time k + 1 with $\hat{z}(k+1/k)=h(\hat{x}(k+1/k),\hat{p}_t(k+1/k))$,

$\hat{x}(k+1/k)$ predicted self-position (P2P) of the unit at time k + 1,

$\hat{p}_t(k+1/k)$ predicted landmark position (LP) of the unit at time k + 1,

$\nabla h_{\hat{p}t}(k+1/k)$ Jacobian of the function h with respect to $\hat{p}_t(k+1/k)$,

$$\nabla h_{\tilde{x}}(k+1/k) \qquad \text{Jacobian of the function h with respect to } \hat{x}(k+1/k),$$

P(k + 1/k)        covariance matrix (U2P) of $\hat{x}(k+1/k)$ at time k + 1,

$\Lambda_{\tilde{l}}(k+1/k)$       covariance matrix (ULP) of $\hat{p}_{\tilde{l}}(k+1/k)$ at time k + 1, and

$\eta$                   convergence factor with $0 \leq \eta \leq 1$,

the indices ^ denoting a predicted value and ~ a difference value.

8. Method according to Claim 7, in which it holds that R(k + 1) = 0.

**Revendications**

1. Procédé d'établissement d'une carte de l'environnement et de détermination d'une position propre d'une unité automobile dans un environnement à l'aide de l'unité automobile, dans lequel

   a) à partir d'une position de départ de l'unité automobile, une modification de position est réalisée et est déterminée par au moins un premier moyen de mesure disposé sur l'unité ;
   b) une première position propre (P1K) de l'unité automobile relativement à la position de départ est déterminée en tenant compte d'une incertitude de position (U1K) de l'unité automobile ;
   c) un écartement de départ d'un point de repère est mesuré par un deuxième moyen de mesure disposé sur l'unité automobile ;
   d) en tenant compte de l'incertitude de position et de l'écartement de départ par rapport au point de repère (LP), un premier écartement avec une incertitude de situation (ULP) est constaté entre l'unité automobile et le point de repère ;
   e) la première position propre (P1K) et le point de repère pouvant être déterminé à partir du premier écartement par rapport à l'unité automobile forment une carte de l'environnement ;
   f) en s'appuyant sur une autre modification de position de l'unité automobile déterminée par le premier moyen de mesure, une deuxième position propre (P2P) est déterminée relativement à la première position propre (P1K) en tenant compte de l'incertitude de position (U2P) de l'unité automobile ;
   g) en s'appuyant sur la deuxième position propre, un premier deuxième écartement (MP) est déterminé à l'avance par rapport au point de repère à l'aide de la carte de l'environnement ;
   h) un deuxième deuxième écartement (MR) est mesuré entre l'unité automobile et le point de repère ;
   i) une différence ($\tilde{z}$) est déterminée comme erreur du système entre le premier deuxième écartement (MP) et le deuxième deuxième écartement (MR) ;
   j) la différence ($\tilde{z}$) est subdivisée en fonction de l'incertitude de position (U2P) de la position propre et de l'incertitude de situation du point de repère en une correction de position (PK) et une correction de situation (LKO), en s'appuyant sur celles-ci la deuxième position propre (P2P à P2K) et la position des points de repère (LP à LK) sont corrigées dans la carte de l'environnement.

2. Procédé selon la revendication 1, dans lequel plusieurs points de repère sont pris en compte en même temps.

3. Procédé selon la revendication 1 ou 2, dans lequel les étapes f) à j) sont appliquées de façon itérative et ainsi la carte de l'environnement est affinée par d'autres modifications de position de l'unité automobile.

4. Procédé selon l'une des revendications 1 à 3, dans lequel une carte de l'environnement est prédéfinie.

5. Procédé selon l'une des revendications précédentes, dans lequel une situation d'au moins un point de repère détecté en plus est enregistré dans la carte de l'environnement.

6. Procédé selon l'une au moins des revendications précédentes, dans lequel le moyen de mesure est un appareil de mesure de distance.

7.  Procédé selon l'une des revendications précédentes, dans lequel la correction de situation (LKO)

$$\tilde{z}_{\hat{p}_t(k+1|k)} \;=\; \eta\beta_{\hat{p}_t(k+1|k)}\tilde{z}(k+1)$$

et la correction de position (PK)

$$\tilde{z}_{\hat{x}(k+1|k)} \;=\; \eta\beta_{\hat{x}(k+1|k)}\tilde{z}(k+1)$$

sont déterminées par

$$\beta_{\hat{p}_t(k+1|k)} \;=\; \frac{\nabla h_{\hat{p}_t(k+1|k)}\Lambda_t(k+1|k)\nabla h^T_{\hat{p}_t(k+1|k)} \;+\; \dfrac{R(k+1)}{2}}{S(k+1)}\,,$$

$$\beta_{\hat{x}(k+1|k)} \;=\; \frac{\nabla h_{\hat{x}(k+1|k)}P(k+1|k)\nabla h^T_{\hat{x}(k+1|k)} \;+\; \dfrac{R(k+1)}{2}}{S(k+1)}\,,$$

une incertitude de position

$$Pos \;=\; \nabla h_{\hat{x}(k+1|k)}P(k+1|k)\nabla h^T_{\hat{x}(k+1|k)}\,,$$

une incertitude de situation

$$Lag \;=\; \nabla h_{\hat{p}_t(k+1|k)}\Lambda_t(k+1|k)\nabla h^T_{\hat{p}_t(k+1|k)}\,,$$

une erreur du système

$$S(k+1) \;=\; \nabla h_{\hat{x}(k+1|k)}P(k+1|k)\nabla h^T_{\hat{x}(k+1|k)} \;+\;$$
$$+\; \nabla h_{\hat{p}_t(k+1|k)}\Lambda_t(k+1|k)\nabla h^T_{\hat{p}_t(k+1|k)} \;+\; R(k+1)$$

une erreur de mesure R (k+1) et avec

$\tilde{z}(k+1)$ une différence de mesure (MR-MP) par rapport au temps k+1,

$\tilde{z}(k+1|k)$ un écartement du point de repère déterminé à l'avance calculé (MP) par rapport au temps k+1 avec

$$\hat{z}(k+1|k) = h(\hat{x}(k+1|k),\; \hat{p}_t(k+1|k))\,,$$

$\hat{x}(k + 1 lk)$          une position propre déterminée à l'avance (P2P) de l'unité par rapport au temps k+1,

$\hat{p}_t(k + 1 lk)$          une position de points de repère déterminée à l'avance (LP) de l'unité par rapport au temps k+1,

$$\nabla h_{\hat{p}_t(k + 1|k)} \quad \text{Jacobine de la fonction h selon } \hat{p}_t(k + 1|k),$$

$$\nabla h_{\hat{x}(k + 1|k)} \quad \text{Jacobine de la fonction h selon } \hat{x}(k + 1|k),$$

$P(k + 1 lk)$          matrice de covariance (U2P) de $\hat{x}(k + 1 lk)$ par rapport au temps k+1,

$\Lambda_t(k + 1 lk)$          matrice de covariance (ULP) de $\hat{p}_t(k + 1 lk)$ par rapport au temps k+1,

$\eta$          facteur de convergence avec $0 \leq \eta \leq 1$,

dans lequel les index ^ désignent une valeur déterminée à l'avance et ~ une valeur différentielle.

8.  Procédé selon la revendication 7,
    dans lequel l'équation R (k+1) = 0 s'applique.

FIG 1

FIG 2